# EUROPÄISCHE PATENTSCHRIFT

(11) **EP 2 213 912 B1**
(45) Veröffentlichungstag und Bekanntmachung des Hinweises auf die Patenterteilung: **30.05.2012**
(21) Anmeldenummer: 10151384.4
(22) Anmeldetag: 22.01.2010
(51) Int. Cl.: F16J 15/26

(54) **Segmentierter Packungsring**
Segmented packing ring
Bague d'étanchéité segmentée

(30) Priorität: 29.01.2009 AT 1532009
(43) Veröffentlichungstag der Anmeldung: 04.08.2010
(73) Patentinhaber: Hoerbiger Kompressortechnik Holding GmbH, 1220 Wien (AT)
(72) Erfinder: Hold, Christian, 1170 Wien (AT); Lindner-Silwester, Tino, 1150 Wien (AT); Jandl, Alexander, 3495 Rohrendorf (AT)
(74) Vertreter: Weiss, Christian

(56) Entgegenhaltungen:
- DE-A1-102006 015 327
- GB-A- 562 591
- GB-A- 191 209 969
- US-A- 892 978
- US-A- 1 338 206

## Beschreibung

Die gegenständliche Erfindung betrifft einen segmentierten Packungsring mit einer Anzahl von ersten Dichtsegmenten mit radial innen liegender ersten Dichtfläche, einer Anzahl von zweiten Dichtsegmenten mit radial innen liegender zweiten Dichtfläche und einer Anzahl von Stützsegmenten, wobei die Stützsegmente und die zweiten Dichtsegmente in Umfangsrichtung abwechselnd aneinander anliegend angeordnet sind und die ersten Dichtsegmente axial an den zweiten Dichtsegmenten und an den Stützsegmenten anliegend angeordnet sind, sodass die Stützsegmente axial nur an den ersten Dichtsegmenten anliegen, und wobei an den zweiten Dichtsegmenten eine sich axial erstreckende Nase vorgesehen ist.

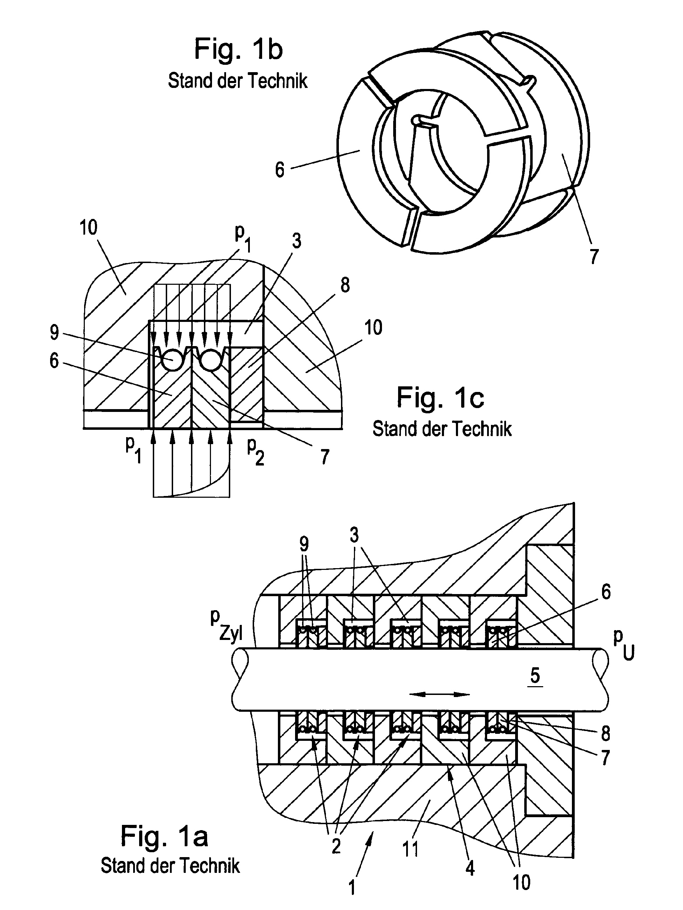

Kolbenkompressoren, vor allem in doppeltwirkender Bauweise, erfordern eine Abdichtung entlang der oszillierenden Kolbenstange 5. Diese Abdichtung hat typischerweise gegen den im Kurbelkasten herrschenden (niedrigen) Umgebungsdruck pᵤ zu erfolgen. Die Dichtelemente, die in einer solchen Abdichtung 4 zum Einsatz kommen, werden Packungsringe 6, 7 genannt und sind in einer sogenannten Druckpackung 2, in der Regel bestehend aus einer Anzahl von Packungsringen 6, 7, angeordnet, wie beispielhaft in herkömmlicher Ausführung in Fig. 1 dargestellt. Die Dichtelemente können dabei unvermeidlichen Lateralbewegungen der Kolbenstange 5 folgen, ohne ihre Dichtwirkung zu verlieren. Zur Erhöhung der Lebensdauer und Zuverlässigkeit einer Druckpackung 2 werden in einer Druckpackung 2 mehrere solcher Packungsringe 6, 7 in Serie geschaltet. Die Packungsringe 6,7 können dabei in der Druckpackung 2 in einer Kammerscheibe 10 angeordnet werden. Um eine Extrusion eines Packungsringes 7 in den Ringspalt zwischen Kolbenstange 5 und Kammerscheibe 10 zu verhindern (insbesondere bei weichen Packungsringmaterialien bzw. bei hohen Drücken), kann in der Druckpackung 2 zusätzlich ein Stützring 8 vorgesehen sein. In einer Abdichtung 4 werden in der Regel mehrer Druckpackungen 2 hintereinander angereiht. Solche Druckpackungen 2 bzw. Abdichtungen 4 sind aus dem Stand der Technik in unterschiedlichsten Ausgestaltungen hinlänglich bekannt, z.B. aus der GB 928 749 A oder der US 1 008 655 A.

Packungsringe 6, 7 sind selbstaktivierende Dichtungen, die für eine ausreichende Dichtwirkung, also eine hinreichend kleine Leckage, in der Regel eine gewisse abzudichtende Druckdifferenz p₁ - p₂ benötigen (Fig. 1 c). Der Gasdruck in einer Packungskammer 3 baut sich in den abzudichtenden Spalten eines Packungsringes 6, 7 vom höheren Niveau p₁ auf das niedrigere Niveau p₂ in der nächsten Packungskammer 3 ab. Fig. 1c zeigt schematisch diesen Druckabbau im zwischen Packungsring 6, 7 und Kolbenstange 5 gebildeten Dichtspalt. Diesem Dichtspalt kommt eine wesentliche Rolle im Hinblick auf die Leistungsfähigkeit der Packungsringe 6, 7 zu, da die Relativbewegung der Kontaktflächen zwischen Kolbenstange 5 und Ringen 6, 7 einen Verschleiß der Packungsringe 6, 7 hervorruft. Dieser Ringverschleiß erfordert in der Regel geschnittene Ringformen, die ein selbsttätiges kontinuierliches Nachstellen des Ringes bei Materialabtrag an diesem Dichtspalt Ring/Kolbenstange ermöglichen. Industriestandard sind dabei radial und tangential geschnittene Ringe 6, 7, welche paarweise in Packungskammern der Druckpackung eingesetzt werden, um die auftretenden Stoßspalte zur Verschleißkompensation gegenseitig abzudecken, wie in Fig. 1 b schematisch dargestellt. Bei geschnittenen Ringformen kommen bekanntermaßen üblicherweise über den Außenumfang gewickelte Schlauchfedern (Umfangfedern) 9 zum Einsatz, welche die Packungsringe 6, 7 auch im drucklosen Zustand an die Kolbenstange 5 pressen.

Bei einer Kombination eines radial und eines tangential geschnittenen Packungsringes erfolgt die Abdichtung zur Kolbenstange hin im Wesentlichen nur durch den tangential geschnittenen Packungsring, dessen Ringsegmente sich durch die tangentiale Schnittführung bei Verschleiß zusammenschieben können und somit die Dichtwirkung beibehalten. Der radial geschnittene Packungsring dient im Wesentlichen nur dazu, die Verschleißspalte des tangentialen Packungsringes in axialer und radialer Richtung abzudichten und unterliegt nur in der Einlaufphase einem geringen Verschleiß. Der radiale Packungsring verschleißt dabei nur so weit bis die Ringsegmente in Umfangsrichtung aneinander liegen. Die radial und tangential geschnittenen Packungsringe verschleißen somit unterschiedlich. Neben dem Umstand, dass der tangential geschnittene Ring wegen der größeren Flächenpressung stets rascher verschleißt als der radial geschnittene, weist der tangentiale Ring typischerweise auch einen ungleichmäßigen Verschleiß in Umfangsrichtung auf, womit ein Öffnen der Tangentialschnitte und damit eine signifikant erhöhte Leckage einhergehen können. Damit kann ein solcher Ring, auch wenn er noch nicht an seinem Verschleißstopp (gegeben durch Verschleißkompensationsspalt) angelangt ist, seine Dichtwirkung zum größten Teil verlieren. Darüber hinaus benötigt eine Packungsring-Kombination aus radial und tangential geschnittenem Packungsring bei zunehmendem Verschleiß elastische Deformationen der Ringsegmente, um die Dichtwirkung aufrecht erhalten zu können. Damit kommen als Werkstoff für solche Packungsring-Kombinationen nur solche in Frage, die entsprechende elastische Deformationen zulassen.

In der JP 05-044850 A1 wurde bereits vorgeschlagen, einen sechsteiligen segmentierten Dichtring zu verwenden, der drei Dichtsegmente aufweist, die radial innen eine durchgehende Dichtfläche ausbilden. Die Dichtsegmente liegen an dazwischen angeordneten keilförmigen Stützsegmenten an. Bei Verschleiß der Dichtsegmente bewegen sich die Dichtsegmente radial nach innen und gleiten dabei entlang der Stützsegmente, die im Wesentlichen an derselben Position bleiben. Ein solcher Dichtring kann somit einem sehr großen Verschleiß unterliegen, ohne seine Dichtwirkung zu verlieren. Die Verschleißrate ist dabei, abgesehen von den herrschenden Drücken, im Wesentlichen nur vom gewählten Ringmaterial bzw. von der Materialkombination Ring/Kolbenstange abhängig und kann daher sehr hoch sein, sodass der Dichtring sehr rasch verschleißen kann. Der Dichtring muss folglich rechtzeitig gewechselt werden, bevor die Dichtsegmente zu weit verschleißen und dadurch möglicherweise durch die mechanische und/oder thermische Belastung beschädigt oder sogar zerstört werden. Da der tatsächliche Verschleiß von außen jedoch nicht erkannt werden kann, muss die Abdichtung regelmäßig überprüft werden, was meistens auch mit einem (verfrühten) Austausch der Dichtringe einhergeht. Die Lebensdauer der Dichtringe wird daher möglicherweise nicht optimal ausgenutzt.

Die US 892 978 A beschreibt einen Dichtring aus ersten und zweiten Dichtsegmenten und aus Stützsegmenten, wobei die zweiten Dichtsegmente und die Stützsegmente in Umfangsrichtung abwechselnd aneinander liegenden angeordnet sind und die ersten Dichtsegmente axial an den zweiten Dichtsegmenten und den Stützsegmenten anliegen. An den zweiten Dichtsegmenten sind axiale vorstehende Nasen mit einer tangentialen Anlagefläche vorgesehen. Die ersten Dichtsegmente liegen an tangentialen Anlageflächen der Nasen an. Eine ähnliche Anordnung zeigt die US 1 338 206 A, bei der an einem ersten Dichtsegmente wieder eine Nase mit einer tangentialen Anlagefläche ausgebildet ist, an der zweite Dichtsegmente anliegen. In der US 892 978 A und US 1 338 206 A wird der Verschleiß aber ausschließlich von den Segmenten bestimmt, die an den tangentialen Anlageflächen an den Nasen anliegen. Diese Segmente verschleißen frei entsprechend deren Materialeigenschaften. Die Verschleißrate ist daher im Wesentlichen nur vom Material des Ringes bestimmt und kann daneben nicht beeinflusst werden.

Die GB 191209969 A wiederum zeigt einen segmentierten Packungsring aus zwei separaten axial aneinander liegenden Ringen, die jeweils aus einer Vielzahl in Umfangsrichtung lose aneinander liegenden keilförmigen Ringsegmenten bestehen. Dabei bilden Dichtsegmente jeweils eine durchgehende innere Umfangsfläche, da die dazwischen liegenden Stützsegmente eine geringere radiale Höhe haben. Zwei solcher Ringe werden axial nebeneinander angeordnet, wobei die Dichtsegmente jeweils den radial innen an den Stützsegmenten entstehenden axialen Spalt des benachbarten Ringes abdecken. Jeweils zwei axial benachbarte Segmente werden mittels eines Stiftes gelenkig miteinander verbunden. Auch bei diesem Packungsring ist die Verschleißrate wiederum nur vom Ringmaterial abhängig und wird in keinster Weise reduziert oder beeinflusst.

Es ist folglich eine Aufgabe der gegenständlichen Erfindung, die oben angeführten Probleme zu beheben, insbesondere einen Packungsring anzugeben, der einem sehr großem Verschleiß unterworfen werden kann, sehr langsam verschleißt und das verfügbare Verschleißpotential optimal ausnutzen kann.

Diese Aufgabe wird erfindungsgemäß dadurch gelöst, dass die Umfangsstirnflächen der Nase in Umfangsrichtung zwischen den Umfangsstirnflächen zweier benachbarter ersten Dichtsegmenten angeordnet sind, wobei die Umfangsstirnflächen der Nase und die Umfangsstirnflächen der benachbarten ersten Dichtsegmente parallel zu einander angeordnet sind. Durch diese Anordnung der Segmente wird erreicht, dass die Dichtsegmente durch jeweils ein anderes Segment entlastet und damit die Verschleißrate des Packungsringes reduziert wird. Außerdem kann dadurch das verfügbare Material der Dichtsegmente in hohem Ausmaß für den Verschleiß ausgenutzt werden.

Falls in Umfangsrichtung zwischen einer axialen Nase und den benachbarten ersten Dichtsegmenten ein Spalt vorgesehen ist, wird eine Einlaufphase geschaffen, in der die ersten Dichtsegmente stärker gegen die Gegendichtfläche gepresst werden, wodurch sich die Dichtfläche der ersten Dichtsegmente entsprechend anpassen kann. Damit wird eine hohe Dichtwirkung des Packungsringes von Anfang an erreicht.

Die Dichtfläche des Packungsringes kann reduziert werden, wenn die Stützsegmente mit einem größeren Innenradius ausgeführt sind, als die zweiten Dichtsegmente. Mit dieser Maßnahme kann die durch den Packungsring entstehende Reibungswärme verringert werden, wodurch weniger Kühlleistung für die Abdichtung benötigt wird oder der Packungsring unter anspruchsvollren Umgebungsbedingungen (Druck, Relativgeschwindigkeiten, etc.) eingesetzt werden kann.

Die Verschleißrate des Packungsringes lässt sich einfach optimal einstellen, wenn die Umfangsstirnflächen der Stützsegmente und der zweiten Dichtsegmente gegenüber einer Radialen geneigt sind. Dieser Winkel ist ein frei einstellbarer Designparameter, mit der Packungsring auf die jeweilige Anwendung und Anforderung optimal angepasst werden kann. Besonders vorteilhaft wird der Winkel dabei so gewählt, dass die Umfangsstirnflächen der axialen Nase von radial innen nach radial außen keilförmig zusammenlaufen.

Um einen ganzflächigen Kontakt der ersten und zweiten Dichtsegmente zu ermöglichen, werden die Umfangsstirnflächen der ersten Dichtsegmente vorteilhaft entsprechend der Keilform der axialen Nase gegenüber einer Radialen geneigt.

Eine radiale Nut für einen einfach wirkenden Packungsring läst sich sehr einfach realisieren, wenn die axiale Breite der axialen Nase kleiner ist, als die axiale Breite der ersten Dichtsegmente, da dann die Nase selbst diese Nut ausbildet. Damit kann auf eine Schwächung der ersten Dichtsegmente durch eine solche radiale Nut verzichtet werden.

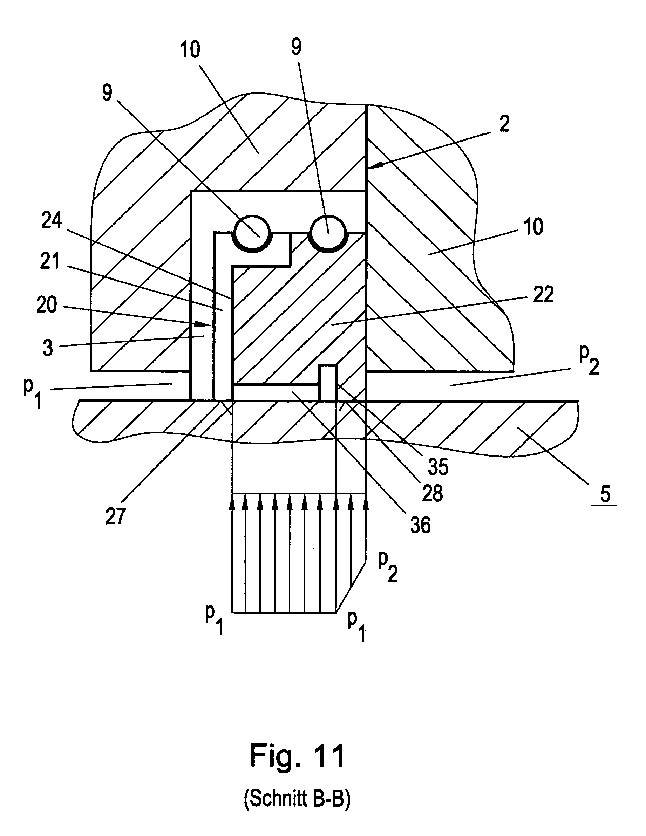

Die gegenständliche Erfindung wird nachfolgend anhand der schematischen, beispielhaften, nicht einschränkenden und vorteilhafte Ausgestaltungen zeigenden Figuren 1 bis 11 beschrieben. Dabei zeigt
Fig. 1 eine bekannte Abdichtung einer Kolbenstange mit radial und tangential geschnittenen Packungsringen,
Figs. 2 und 3 unterschiedliche perspektivische Ansichten eines erfindungsgemäßen segmentierten Packungsringes,
Figs. 4 bis 6 unterschiedliche Ansichten eines erfindungsgemäßen segmentierten Packungsringes,
Fig. 7 die Anwendung eines erfindungsgemäßen segmentierten Packungsringes in einer Druckpackung eines Kolbenkompressors,
Fig. 8 und 9 unterschiedliche perspektivische Ansichten eines erfindungsgemäßen segmentierten Packungsringes mit Druckausgleich und
Fig. 10 und 11 Schnitte durch einen erfindungsgemäßen segmentierten Packungsringes mit Druckausgleich.

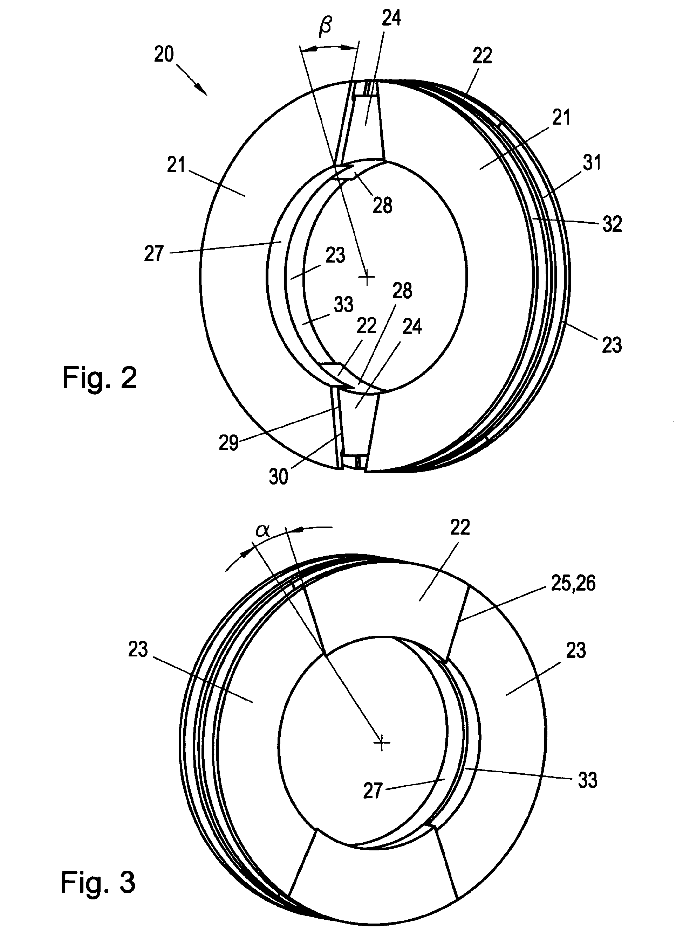

Die perspektivischen Darstellungen eines erfindungsgemäßen segmentierten Packungsringes 20 nach den Figuren 2 und 3 zeigen den Packungsring 20 von zwei unterschiedlichen Seiten. Der Packungsring 20 besteht aus unterschiedlichen ringsegmentförmigen Segmenten, die zusammen den Packungsring 20 ausbilden. Der Packungsring 20 wird hier aus jeweils zwei ersten Dichtsegmenten 21, zwei zweiten Dichtsegmenten 22 und zwei Stützsegmenten 23 gebildet. Der Packungsring 20 kann aber auch mit jeweils mehr als zwei der Segmente 21, 22, 23 ausgeführt sein. Die zweiten Dichtsegmente 22 und die Stützsegmente 23 liegen in Umfangsrichtung an ihren Umfangsstirnflächen 25, 26 aneinander, wobei die Stützsegmente 23 und die zweiten Dichtsegmente abwechselnd aneinander anliegend angeordnet sind. Die ersten Dichtsegmente 21 liegen axial an den zweiten Dichtsegmenten 22 und den Stützsegmenten 23 an. Weiters ist an den zweiten Dichtsegmenten 22 ein axiale Nase 24 vorgesehen, die jeweils in Umfangsrichtung zwischen zwei benachbarten ersten Dichtsegmenten 21 angeordnet ist. Die einzelnen Segmente 21, 22, 23 können, wie hinlänglich bekannt, durch (hier nicht dargestellte) Umfangsfedern 9, die in Umfangsnuten 31, 32 in den radial äußeren Umfangsflächen angeordnet sein können, zusammengehalten werden.

Die ersten Dichtsegmente 21 haben eine radial innen liegende erste Dichtfläche 27, die im betriebsgemäßen Einsatz z.B. an einer oszillierenden Kolbenstange anliegt und gegenüber dieser in axialer Richtung abdichtet. Die zweiten Dichtsegmente 22 haben eine radial innen liegende zweite Dichtfläche 28, die im betriebsgemäßen Einsatz z.B. an einer oszillierenden Kolbenstange anliegt und gegenüber dieser in axialer Richtung abdichtet. Durch die erste Dichtfläche 27 und die zweite Dichtfläche 28 wird somit eine in Umfangsrichtung geschlossene Dichtfläche gebildet. Die ersten Dichtsegmente 21 überdecken weiters auch den durch die Umfangsstirnflächen 25, 26 gebildeten Stoß zwischen den zweiten Dichtsegmenten 22 und den Stützsegmenten 23 und dichten somit auch diesen Stoß in axialer Richtung ab. In radialer Richtung wird die Abdichtung durch den durch die Umfangsstirnflächen 25, 26 gebildeten Stoß zwischen den zweiten Dichtsegmenten 22 und den Stützsegmenten 23 bewirkt.

Die Umfangsstirnflächen 29 der axialen Nasen 24 an den zweiten Dichtsegmenten 22 können gegenüber einer Radialen durch den Mittelpunkt des Packungsringes 20 um einen Winkel β geneigt sein, sodass die Umfangsstirnflächen 29 von radial innen nach radial außen keilförmig zusammenlaufen. Die Umfangsstirnflächen 30 der ersten Dichtsegmente 21 werden bevorzugt parallel dazu angeordnet, damit ein ganzflächiger Kontakt der Umfangsstirnflächen 29, 30 möglich ist. Es kann in Umfangsrichtung ein Spalt h zwischen den Umfangsstirnflächen 29, 30 der Stützsegmente und der zweiten Dichtsegmente 22 vorgesehen sein, sodass die die Umfangsstirnflächen 29, 30 nicht gleich aneinander anliegen.

Die axiale Breite der axialen Nase 24 kann auch kleiner sein, als die axiale Breite der ersten Dichtsegmente 21, sodass die Nase 24 gegenüber der freien Stirnfläche der ersten Dichtsegmente 21 axial etwas nach innen springt. Damit bilden die Nasen 24 an der Stirnfläche des Packungsringes 20 gleichzeitig auch eine radial ausgerichtete Nut, für einen einfach wirkenden Packungsring 20. Im Falle, dass die Nase 24 nicht nach innen springt, kann auch am ersten Dichtsegment 21 an der freien Stirnfläche eine radiale Nut vorgesehen sein, um einen einfach wirkenden Packungsring zu erhalten. Für einen doppelt wirkenden Packungsring wird eine solche radiale Nut nicht benötigt.

Die Umfangsstirnflächen 25, 26 der zweiten Dichtsegmente 22 und der Stützsegmente 23 können um einen Winkel α gegenüber einer Radialen geneigt angeordnet sein. Die Stützsegmente 23 haben eine radial innen liegende Umfangsfläche 33, die einen größeren Radius aufweisen können, als die Dichtflächen 27, 28 der ersten und zweiten Dichtsegmente 21, 22, sodass an den Stützsegmenten 23 radial innen ein Ringspalt entsteht. Ein solcher Ringspalt verkleinert die Dichtfläche des Packungsringes 20 und damit vorteilhaft gleichzeitig auch die entstehende Reibungswärme.

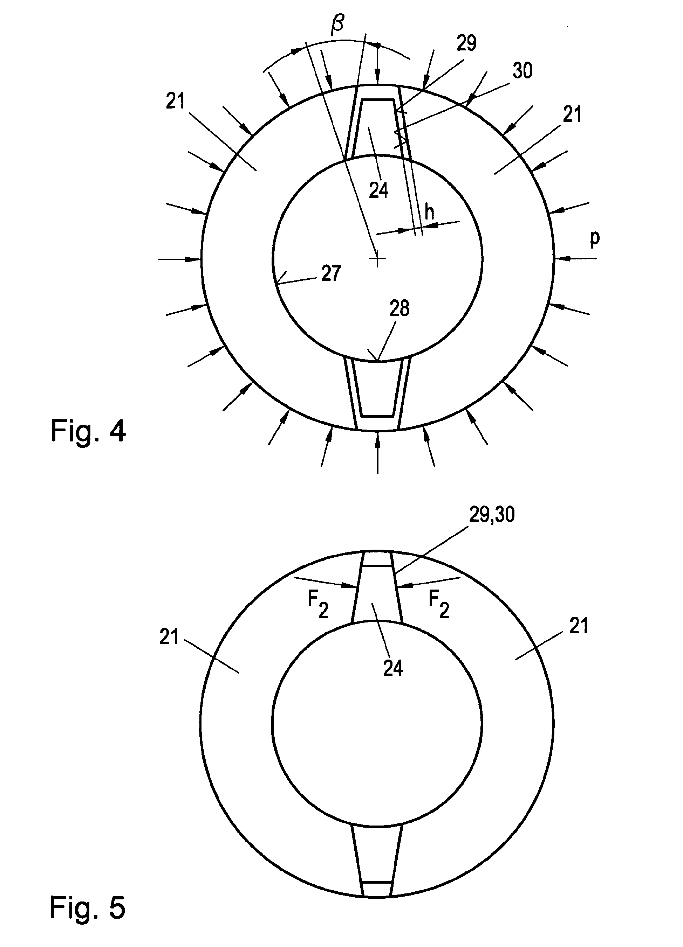

Die Funktion des erfindungsgemäßen Packungsringes 20 wird nachfolgend unter Bezugnahme auf die Figuren 4 bis 6 erläutert. Radial außen wirkt auf die Segmente 21, 22, 23 des Packungsringes 20 ein Druck p, der die ersten Dichtsegmente 21 radial nach innen presst. In einer ersten Phase verschleißen daher die ersten Dichtsegmente 21 mit einer bestimmten Verschleißrate bis der Spalt h geschlossen ist und die ersten Dichtsegmente 21 an den axialen Nasen 24 anliegen. Die zweiten Dichtsegmente 22 stützen sich in dieser Phase an den Stützsegmenten 23 ab und werden durch die Stützsegmente 23 entlastet, da aufgrund des anliegenden Druckes p und des Winkels α eine Kraft F₁ entsteht, die versucht die zweiten Dichtsegmente 22 auseinanderzudrücken. Diese Kraft F₁ kann daher durch den Winkel α und gegebenenfalls durch den Ringspalt im Bereich der Stützsegmente 23 eingestellt werden. Die zweiten Dichtsegmente 22 verschleißen folglich in dieser Phase mit einer geringeren Verschleißrate, als die ersten Dichtsegmente 21.

Wenn aufgrund dieser unterschiedlichen Verschleißraten der Spalt h geschlossen ist und die ersten Dichtsegmente 21 an den axialen Nasen 24 anliegen (wie in Fig. 5 dargestellt), wird die Verschleißrate der ersten Dichtsegmente 21 reduziert, da sich die ersten Dichtsegmente 21 nun an den zweiten Dichtsegmenten 22 abstützen, die Verschleißrate der zweiten Dichtsegmente 22 aber gleichzeitig erhöht, da durch den Winkel β eine Kraft F₂ entsteht, die die zweiten Dichtsegmente 22 nach innen drückt. Es stellt sich folglich eine "mittlere" Verschleißrate ein, mit der die ersten und zweiten Dichtsegmente 21, 22 weiter verschleißen. Da die beiden Dichtsegmente 21, 22 aber entlastet werden (zweites Dichtsegment 22 durch Stützsegment 23 und erstes Dichtsegment 21 durch zweites Dichtsegment 22), stellt sich eine niedrige Gesamt-Verschleißrate des Packungsringes 20 ein. Die Stützsegmente 23 verschleißen dabei nicht. Durch die Winkel α und β, sowie gegebenenfalls durch den Ringspalt, kann das Verschleißverhalten des Packungsringes 20 einfach und flexibel eingestellt werden, sodass der Packungsring 20 für die jeweilige Anwendung optimal ausgelegt ist.

Auf den Spalt h kann dabei auch verzichtet werden. Falls vorhanden, dient der Spalt h dazu, eine Art Einlaufphase zur Verfügung zu stellen, in der die Dichtflächen 27 der ersten Dichtsegmente 21 stärker an die Gegendichtfläche angepresst werden, um durch eine dadurch erzielte Anpassung der Dichtflächen 27 eine von Anfang hohe Dichtwirkung zu erzielen. Außerdem wird dadurch sichergestellt, dass die Dichtwirkung an der Dichtfläche 27 unabhängig von fertigungstechnischen Schwankungen in den Abmessungen der Segmente 21, 22, 23 von Beginn an gegeben ist. Ebenso kann auf den durch die Stützsegmente 23 gebildeten Ringspalt verzichtet werden.. Dieser dient aber ebenfalls dazu, die Dichtwirkung an der Dichtfläche 28 der zweiten Dichtsegmente 22 unabhängig von fertigungstechnischen Schwankungen in den Abmessungen der Segmente 21, 22, 23 von Beginn einsetzen zu lassen.

Die Dichtsegmente 21, 22 verschleißen auf diese Weise, bis die ersten Dichtsegmente 21 in Umfangsrichtung aneinander liegen. Darüber hinaus würden nur mehr die zweiten Dichtsegmente 22 weiter verschleißen. Das verfügbare Material der Dichtsegmente 21, 22 kann somit in sehr hohem Ausmaß ausgenutzt werden, bevor der Packungsring 20 gewechselt werden muss.

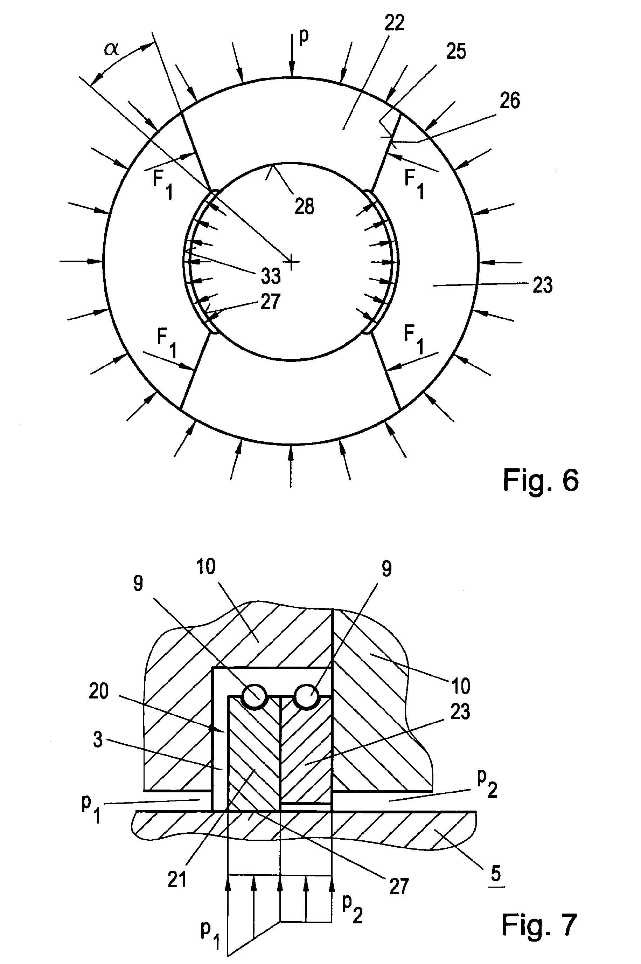

Die Anwendung eines oben beschriebenen erfindungsgemäßen segmentierten Packungsringes 20 wird anhand der Fig. 7 für das Beispiel einer Abdichtung der Kolbenstange 5 eines Kolbenkompressors beschrieben. Der segmentierte Packungsring 20 ist dabei wiederum in einer Kammerscheibe 10 einer Druckpackung angeordnet, wobei die ersten Dichtsegmente 21 dem hohen Druck p₁ zugewandt angeordnet sind. Selbstverständlich könnte in der Druckpackung auf der Seite des niedrigen Druckes p₂ auch ein Stützring vorgesehen sein, wie zu Fig. 1 beschrieben. Radial außen wirkt auf die Segmente 21, 22, 23 des Packungsringes 20 der in der Packungskammer 3 anstehende hohe Druck p₁. Die Dichtfläche 27 der Stützsegmente 23 werden durch den Ringspalt, in dem der niedrige Druck p₂ anliegt, entlastet. Ansonsten funktioniert der Packungsring 20 wie oben zu den Figuren 4 bis 6 beschrieben.

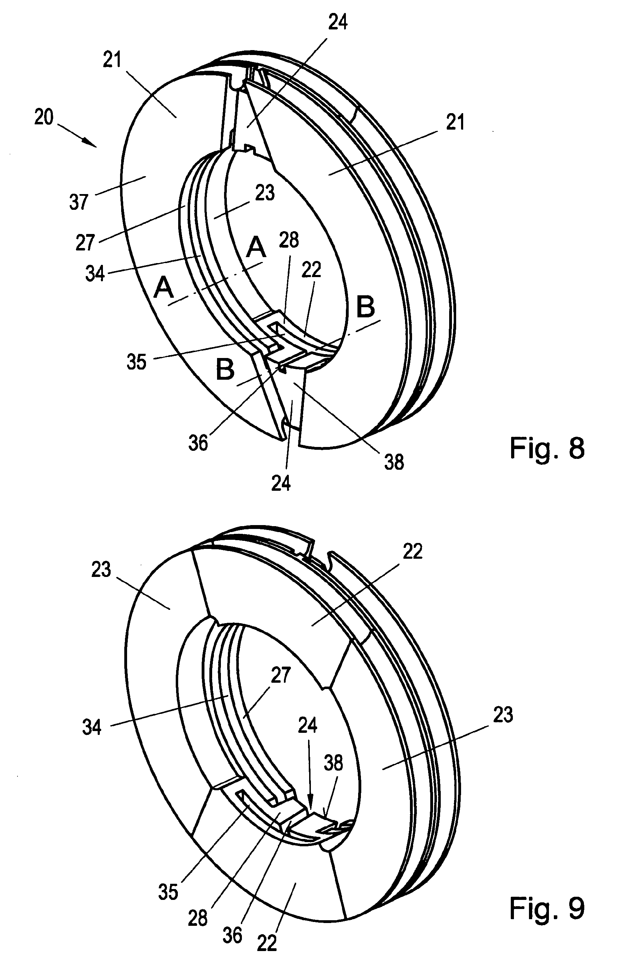

Ein erfindungsgemäßer segmentierter Packungsring 20 lässt sich auch sehr einfach mit Druckausgleich realisieren, wie nachfolgend unter Bezugnahme auf die Figuren 8 und 9 beschrieben. Der dargestellte Packungsring 20 entspricht dem oben beschriebenen Packungsring 20. Zusätzlich sind an den ersten Dichtsegmenten 21 in die radial innere Umfangsfläche 27 sich in Umfangsrichtung erstreckende Druckausgleichsnuten 34 eingearbeitet. Solange die Nase 24 und die ersten Dichtsegmente 21 in Umfangsrichtung noch nicht aneinander liegen, wirkt der an der freien Stirnfläche 37 der ersten Dichtsegmente 21 anliegende Druck auch in der Druckausgleichsnut 34. Wenn die ersten Dichtsegmente 21 an der Nase 24 anliegen, kann vorgesehen sein, dass der Druckausgleich durch die Druckausgleichsnut 34 nicht mehr weiter wirkt, indem die Druckausgleichsnut 34 durch die Nase 24 abgeschlossen wird, oder dass der Druckausgleich durch die Druckausgleichsnut 34 weiterhin wirkt. Im letzten Fall ist vorzusehen, dass die Druckausgleichsnut 34 weiterhin mit dem an der freien Stirnfläche 37 der ersten Dichtsegmente 21 anliegenden Druck verbunden ist. Dies kann z.B. durch eine axiale, von der freien Stirnfläche 37 weggehende und in die Druckausgleichsnut 34 mündende Nut verwirklicht werden. Alternativ kann auch die Nase 24 axial soweit zurückgesetzt sein, dass die Druckausgleichsnut 34 bei Anliegen der ersten Dichtsegmente 21 an der Nase 24 nicht ganz geschlossen wird.

Ebenso können die zweiten Dichtsegmente 22 druckausgeglichen ausgeführt sein. Dazu können in der radial inneren Umfangsfläche 28 der zweiten Dichtsegmente 22 sich in Umfangsrichtung erstreckende Druckausgleichsnuten 35 eingearbeitet sein, die sich in Umfangsrichtung jedoch nicht über die ganze Umfangslänge der zweiten Dichtsegmente 22 erstrecken. Diese Druckausgleichsnuten 35 sind durch eine axiale Nut 36 mit der Stirnfläche 38 der Nase 24 verbunden. Damit wirkt der an der freien Stirnfläche 38 der Nase 24 anliegende Druck auch in der Druckausgleichsnut 35. Anstatt der axialen Nut 36 könnte die Druckausgleichsnut 35 im zweiten Dichtsegment auch über eine radiale Bohrung mit der radial äußeren Umfangsfläche der Dichtsegmente verbunden sein, womit der dort wirkende Druck auch in der Umfangsnut 35 wirken würde. Es ist aber natürlich auch denkbar, den Packungsring 20 nur mit Druckausgleichsnuten 34 in den ersten Dichtsegmenten 21 oder nur mit Druckausgleichsnuten 35 in den zweiten Dichtsegmenten 22 auszuführen. Durch einen solchen Druckausgleich kann die wirkende Flächenpressung zwischen Packungsring 20 bzw. einzelnen Dichtsegmenten 21, 22 des Packungsringes 20 und der Gegendichtfläche, z.B. an einer Kolbenstange, und folglich der Verschleiß des Packungsringes 20 reduziert werden.

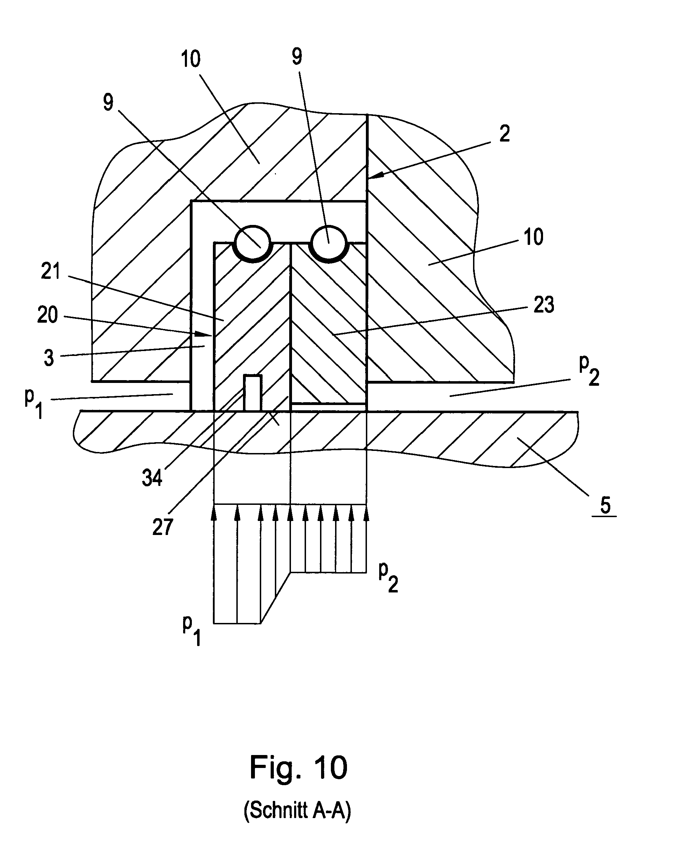

Die Wirkung der Druckausgleichsnuten 34, 35 wird unter Bezugnahme auf die Fig. 10 anhand einer Anwendung des Packungsringes als Abdichtung einer Kolbenstange 5 eines Kompressors gezeigt. In Fig. 10 ist ein Schnitt durch den Packungsring 20 entlang der Linie A-A dargestellt. Der segmentierte Packungsring 20 ist dabei wiederum in einer Kammerscheibe 10 einer Druckpackung 2 angeordnet, wobei die ersten Dichtsegmente 21 dem hohen Druck p₁ zugewandt angeordnet sind. Selbstverständlich könnte in der Druckpackung auf der Seite des niedrigen Druckes p₂ auch ein Stützring vorgesehen sein, wie zu Fig. 1 beschrieben. Radial außen wirkt auf die Segmente 21, 22, 23 des Packungsringes 20 der in der Packungskammer 3 anstehende hohe Druck p₁. An den ersten Dichtsegmenten 21 liegt radial innen an den Dichtflächen 27 durch die Druckausgleichsnuten 34 der hohe Druck p₁ an. An den zweiten Dichtsegmenten 22 wirkt in den Druckausgleichsnuten 35 durch die axialen Nuten 36 (oder äquivalent durch eine radiale Bohrung wie oben beschrieben) ebenfalls der hohe Druck p₁. Dazwischen stellt sich ein Druckverlauf zwischen den beiden Druckausgleichsnuten 34, 35 ein.

## Patentansprüche

1. Segmentierter Packungsring mit einer Anzahl von ersten Dichtsegmenten (21) mit radial innen liegender ersten Dichtfläche (27), einer Anzahl von zweiten Dichtsegmenten (22) mit radial innen liegender zweiten Dichtfläche (28) und einer Anzahl von Stützsegmenten (23), wobei die Stützsegmente (23) und die zweiten Dichtsegmente (22) in Umfangsrichtung abwechselnd aneinander anliegend angeordnet sind und die ersten Dichtsegmente (21) axial an den zweiten Dichtsegmenten (22) und an den Stützsegmenten (23) anliegend angeordnet sind, sodass die Stützsegmente (23) axial nur an den ersten Dichtsegmenten (21) anliegen, und wobei an den zweiten Dichtsegmenten (22) eine sich axial erstreckende Nase (24) vorgesehen ist, **dadurch gekennzeichnet, dass**, die Umfangsstirnflächen (29) der Nase (24) in Umfangsrichtung zwischen den Umfangsstirnflächen (30) zweier benachbarter ersten Dichtsegmenten (21) angeordnet sind, wobei die Umfangsstirnflächen (29) der Nase (24) und die Umfangsstirnflächen (30) der benachbarten ersten Dichtsegmente (21) parallel zu einander angeordnet sind.

2. Segmentierter Packungsring nach Anspruch 1, **dadurch gekennzeichnet, dass** in Umfangsrichtung zwischen einer axialen Nase (24) und den benachbarten ersten Dichtsegmenten (21) ein Spalt (h) vorgesehen ist.

3. Segmentierter Packungsring nach Anspruch 1 oder 2, **dadurch gekennzeichnet, dass** die Stützsegmente (23) mit einem größeren Innenradius ausgeführt sind, als die zweiten Dichtsegmente (22).

4. Segmentierter Packungsring nach einem der Ansprüche 1 bis 3, **dadurch gekennzeichnet, dass** die Umfangsstirnflächen (25, 26) der Stützsegmente (23) und der zweiten Dichtsegmente (22) gegenüber einer Radialen geneigt sind.

5. Segmentierter Packungsring nach einem der Ansprüche 1 bis 4, **dadurch gekennzeichnet, dass** die Umfangsstirnflächen (29) der axiale Nase (24) von radial innen nach radial außen keilförmig zusammenlaufend ausgeführt ist.

6. Segmentierter Packungsring nach Anspruch 5, **dadurch gekennzeichnet, dass** die Umfangsstirnflächen (30) der ersten Dichtsegmente (21) entsprechend der Keilform der axialen Nase (24) gegenüber einer Radialen geneigt sind.

7. Segmentierter Packungsring nach einem der Ansprüche 1 bis 6, **dadurch gekennzeichnet, dass** die axiale Breite der axialen Nase (24) kleiner ist, als die axiale Breite der ersten Dichtsegmente (21).

8. Segmentierter Packungsring nach einem der Ansprüche 1 bis 6, **dadurch gekennzeichnet, dass** in der radial inneren Umfangsfläche (27) des ersten Dichtsegments (21) eine sich in Umfangsrichtung erstreckende Druckausgleichsnut (34) vorgesehen ist.

9. Segmentierter Packungsring nach einem der Ansprüche 1 bis 8, **dadurch gekennzeichnet, dass** in der radial inneren Umfangsfläche (28) des zweiten Dichtsegments (22) eine sich in Umfangsrichtung erstreckende Druckausgleichsnut (35) vorgesehen ist, die sich in Umfangsrichtung über einen Teil der Umfangslänge des zweiten Dichtsegments (22) erstreckt.

10. Segmentierter Packungsring nach Anspruch 8, **dadurch gekennzeichnet, dass** die Druckausgleichsnut (35) im zweiten Dichtsegment (22) durch eine axiale Nut (35) mit der Stirnfläche (38) der Nase (24) oder durch eine radiale Ausnehmung mit der äußeren Umfangsfläche des zweiten Dichtsegments (22) verbunden ist.

11. Druckpackung bestehend aus einem segmentierten Packungsring (20) nach einem der Ansprüche 1 bis 10, der in einer Packungskammer (3) angeordnet ist, wobei die axiale Nase (24) der zweiten Dichtsegmente (22) der Seite mit dem hohen Druck (p₁) zugewandt ist.

12. Abdichtung zwischen einer Kolbenstange (5) eines Kompressors und einem Kompressorgehäuse mit ein Anzahl von axial nebeneinander angeordneten Druckpackungen (2) jeweils bestehend aus einem segmentierten Packungsring (20) nach einem der Ansprüche 1 bis 10, der in einer Packungskammer (3) angeordnet ist, wobei der axiale Nase (24) der zweiten Dichtsegmente (22) der Seite mit dem hohen Druck (p₁) zugewandt ist

## Claims

1. A segmented packing ring with a number of first sealing segments (21) having radially inward lying first sealing surfaces (27), a number of second sealing segments (22) having radially inward lying second sealing surfaces (28) and a number of supporting segments (23), wherein the supporting segments (23) and the second sealing segments (22) are arranged alternately abutting one another in the circumferential direction and the first sealing segments (21) are arranged axially abutting the second sealing segments (22) and the supporting segments (23) so that the supporting segments (23) only abut the first sealing segments (21) in an axial direction, and wherein an axially extending lug (24) is provided on the second sealing segments (22), **characterized in that** the circumferential faces (29) of the lug (24) are arranged between the circumferential faces (30) of two adjacent first sealing segments (21) in the circumferential direction, wherein the circumferential faces (29) of the lug (24) and the circumferential faces (30) of the adjacent first sealing segments (21) are arranged parallel to one another.

2. The segmented packing ring as claimed in claim 1, **characterized in that** a gap (h) is provided in a circumferential direction between an axial lug (24) and the adjacent first sealing segments (21).

3. The segmented packing ring as claimed in claim 1 or 2, **characterized in that** the supporting segments (23) are designed with a larger inside radius than the second sealing segments (22).

4. The segmented packing ring as claimed in one of claims 1 to 3, **characterized in that** the circumferential faces (25, 26) of the supporting segments (23) and of the second sealing segments (22) are at an angle to a radius.

5. The segmented packing ring as claimed in one of claims 1 to 4, **characterized in that** the circumferential faces (29) of the axial lug (24) are designed to converge radially in the form of a wedge from the inside to the outside.

6. The segmented packing ring as claimed in claim 5, **characterized in that** the circumferential faces (30) of the first sealing elements (21) are at an angle to a radius corresponding to the wedge shape of the axial lug (24).

7. The segmented packing ring as claimed in one of claims 1 to 6, **characterized in that** the axial width of the axial lug (24) is less than the axial width of the first sealing segments (21).

8. The segmented packing ring as claimed in one of claims 1 to 6, **characterized in that** a pressure compensating slot (34), which extends in the circumferential direction, is provided in the radially inward circumferential surface (27) of the first sealing segment (21).

9. The segmented packing ring as claimed in one of claims 1 to 8, **characterized in that** a pressure equalizing slot (35), which extends in the circumferential direction and which extends over part of the circumferential length of the second sealing segment (22) in the circumferential direction, is provided in the radially inward circumferential surface (28) of the second sealing segment (22)

10. The segmented packing ring as claimed in claim 8, **characterized in that** the pressure equalizing slot (35) in the second sealing segment (22) is connected to the face (38) of the lug (24) by an axial slot (35) or to the outer circumferential surface of the second sealing segment (22) by a radial recess.

11. A pressure packing comprising a segmented packing ring (20) as claimed in one of claims 1 to 10 which is arranged in a packing chamber (3), wherein the axial lug (24) of the second sealing segments (22) faces the side with the high pressure (p₁).

12. A seal between a piston rod (5) of a compressor and a compressor housing with a number of pressure packings (2) arranged axially adjacent to one another, each comprising a segmented packing ring (20) as claimed in one of claims 1 to 10 which is arranged in a packing chamber (3), wherein the axial lug (24) of the second sealing segments (22) faces the side with the high pressure (p₁).

## Revendications

1. - Bague d'étanchéité segmentée, comportant un nombre de premiers segments d'étanchéité (21) offrant une première surface d'étanchéité (27) disposée radialement vers l'intérieur, un nombre de deuxièmes segments d'étanchéité (22) offrant une deuxième surface d'étanchéité (28) disposée radialement vers l'intérieur et un nombre de segments d'appui (23), les segments d'appui (23) et les deuxièmes segments d'étanchéité (22) étant disposés les uns contre les autres alternativement dans la direction de la circonférence et les premiers segments d'étanchéité (21) étant disposés en reposant dans la direction axiale sur les deuxièmes segments d'étanchéité (22) et sur les segments d'appui (23), de telle sorte que les segments d'appui (23) ne reposent dans la direction axiale que contre les premiers segments d'étanchéité (21), et où sur les deuxièmes segments d'étanchéité (22), il est prévu un mentonnet (24) qui s'étend dans la direction axiale, **caractérisée en ce que** les surfaces frontales circonférentielles (29) du mentonnet (24) sont disposées dans la direction de la circonférence entre les surfaces frontales circonférentielles (30) de deux premiers segments d'étanchéité (21) adjacents, les surfaces frontales circonférentielles (29) du mentonnet (24) et les surfaces frontales circonférentielles (30) des premiers segments d'étanchéité (21) adjacents étant disposées parallèlement entre elles.

2. - Bague d'étanchéité segmentée selon la revendication 1, **caractérisée en ce qu'**il est prévu une fente (h) dans la direction de la circonférence entre un mentonnet axial (24) et le premier segment d'étanchéité (21) adjacent.

3. - Bague d'étanchéité segmentée selon l'une des revendications 1 ou 2, **caractérisée en ce que** les segments d'appui (23) sont réalisés avec un rayon intérieur plus grand que les deuxièmes segments d'étanchéité (22).

4. - Bague d'étanchéité segmentée selon l'une des revendications 1 à 3, **caractérisée en ce que** les surfaces frontales circonférentielles (25, 26) des segments d'appui (23) et des deuxièmes segments d'étanchéité (22) sont inclinées par rapport à une radiale.

5. - Bague d'étanchéité segmentée selon l'une des revendications 1 à 4, **caractérisée en ce que** les surfaces frontales circonférentielles (29) du mentonnet axial (24) se rejoignent en forme de coin entre l'intérieur radial et l'extérieur radial.

6. - Bague d'étanchéité segmentée selon la revendication 5, **caractérisée en ce que** les surfaces frontales circonférentielles (30) des premiers segments d'étanchéité (21) sont inclinées par rapport à une radiale, en suivant la forme de coin du mentonnet axial (24).

7. - Bague d'étanchéité segmentée selon l'une des revendications 1 à 6, **caractérisée en ce que** la largeur axiale du mentonnet axial (24) est plus petite que la largeur axiale des premiers segments d'étanchéité (21).

8. - Bague d'étanchéité segmentée selon l'une des revendications 1 à 6, **caractérisée en ce qu'**il est prévu dans la surface circonférentielle radialement intérieure (27) du premier segment d'étanchéité (21) une rainure (34) de compensation de la pression qui s'étend dans la direction de la circonférence.

9. - Bague d'étanchéité segmentée selon l'une des revendications 1 à 8, **caractérisée en ce qu'**il est prévu dans la surface circonférentielle radialement intérieure (28) du deuxième segment d'étanchéité (22) une rainure (35) de compensation de la pression qui s'étend dans la direction de la circonférence et qui, dans la direction de la circonférence, s'étend sur une partie de la longueur circonférentielle du deuxième segment d'étanchéité (22).

10. - Bague d'étanchéité segmentée selon la revendication 8, **caractérisé en ce que** la rainure (35) de compensation de la pression dans le deuxième segment d'étanchéité (22) est reliée par une rainure axiale (35) à la surface frontale (38) du mentonnet (24) ou par une ouverture radiale à la surface circonférentielle externe du deuxième segment d'étanchéité (22).

11. - Garniture d'étanchéité composée d'une bague d'étanchéité segmentée (20) selon l'une des revendications 1 à 10, qui est placée dans une chambre de garniture (3), le mentonnet axial (24) des deuxièmes segments d'étanchéité (22) étant tourné vers le côté sous haute pression (pₗ).

12. - Dispositif d'étanchéité entre une tige de piston (5) d'un compresseur et un carter de compresseur, comportant un nombre de garnitures d'étanchéité (2) juxtaposées dans la direction axiale, chacune étant constituée d'une bague d'étanchéité segmentée (20) selon l'une des revendications 1 à 10, qui est placée dans une chambre de garniture (3), le mentonnet axial (24) des deuxièmes segments d'étanchéité (22) étant tourné vers le côté sous haute pression (p₁).
